## Europäisches Patentamt
## European Patent Office
## Office européen des brevets

(11) Publication number: **0 179 028**
**B1**

(12) **EUROPEAN PATENT SPECIFICATION**

(45) Date of publication of patent specification: **05.09.90**

(51) Int. Cl.⁵: **E 02 D 31/08**

(21) Application number: **85850196.8**

(22) Date of filing: **04.06.85**

(54) **Arrangement in vibration isolation or vibration damping.**

(30) Priority: **19.10.84 SE 8405248**
**11.04.85 US 722714**

(43) Date of publication of application:
**23.04.86 Bulletin 86/17**

(45) Publication of the grant of the patent:
**05.09.90 Bulletin 90/36**

(84) Designated Contracting States:
**AT BE CH DE FR GB IT LI NL SE**

(56) References cited:
**FR-A-2 108 427**
**GB-A-1 158 436**
**SU-A- 626 154**
**US-A-2 918 090**
**US-A-4 191 496**

**PATENT ABSTRACTS OF JAPAN, vol. 4, no. 161**
**(M-40)643r, 11th November 1980; & JP-A-55 109**
**843 (ASAOKA K.K.) 23-08-1980**

(73) Proprietor: **COMPAGNIE INTERNATIONALE**
**DES PIEUX ARMES FRANKIGNOUL**
**Rue Grétry, 196**
**B-4020 Liège (BE)**

(72) Inventor: **Massarsch, Karl Rainer**
**63, Rue du Moulin**
**B-1310 La Hulpe (BE)**

(74) Representative: **Grahn, Thomas et al**
**Oscar Grahn Patentbyra AB Erik Lindquist**
**Patentbyra AB P.O. Box 19540**
**S-104 32 Stockholm (SE)**

Courier Press, Leamington Spa, England.

## Description

The present invention relates to an arrangement in vibration isolation or vibration damping of vibrations generated in earth or water.

It is generally known that vibrations generated in a medium, e.g. soil or water, and which propagate themselves in the medium, may cause damage to installations both on and in the medium in question. Vibrations, the propagations of which it is desirable to prevent may come from a number of different sources. Apart from natural, undesirable movements in ground strata, e.g. earthquakes, different kinds of machines, construction activities or vehicles can also generate such severe vibrations that the propagation of these in the earth strata causes damage to adjacent buildings, machines or apparatus. It is also desirable during blasting to isolate the effects of the blast to a very limited area. Many attempts have been made to prevent the spread of vibrations, so-called vibration isolation.

The vibration-damping properties of the air have been utilized in some cases in the methods which have come into use. In cases where soil is the medium, gas-filled single-layer diaphragms may be taken down vertically into the soil. In its simplest implementation the diaphragm consists of an air-filled container of a suitable plastics material. One or more such containers can be connected together to form a longer continuous diaphragm element. This arrangement is described exhaustively in the Swedish patent 8202478-7 (publication number 430.620).

Since the pressure in soil or water normally varies with depth, the air will migrate towards the portion of the container where the confining pressure is lowest. The thickness of the container can thus decrease under unfavorable conditions, so that its vibration-damping properties cease.

The disadvantage with this implementation is that air has the possibility of diffusing out of the diaphragm with deteriorated vibration-damping properties as a result. Furthermore, there exists the risk during installation and thereafter that one or more containers are punctured, the isolation properties of the diaphragm then ceasing entirely. The stiffness and strength is also low, since the isolation must be carried out with thin diaphragms.

SU—A—626 154 shows a vibration protection screen for buildings. The screen separates the structures from the vibrations by using hollow rubber spheres, located around the structure in an insulated and covered perimeter trench.

A method of isolating structures on piled foundations from vibrations in the soil is described in the Swedish patent application 8203047-9 with the publication number 436.774, where piles are equipped with a protective tube which provides a slot between the pile and the surrounding soil.

US—A—41 91 496 shows a gas-bag supported structural foundation. The foundation comprises at least one flexible, substantially air-tight bag adapted to be placed on the ground, a floor structure on the bag, a source of gas under pressure, conduits and valve means. The system maintains the floor in a substantially level condition.

In another arrangement described in US—A—4 396 312, the vibration-damping properties of the air are utilized in highways by arranging open air ducts in the outer surface of the road paving. A disadvantage with this method is that only vibrations on the surface are dampened.

If, on the other hand, the medium is water, the problem of propagation and spreading of the vibrations has been solved in such as submarine blasting by the arrangement of bubble curtains. With the aid of submerged, holed air hoses an air curtain is arranged between the blasting location and the structure or structures which are to be protected. This method is temporary and difficult to control.

The present invention has the object of increasing the compressibility and damping properties of soil, water or other fill materials. The invention may be utilized for solving different dynamic or static problems, e.g. those occurring in conjunction with vibrations both in shallow and deep earth strata and in water down to a considerable depth. The arrangement for vibration isolation in accordance with the invention thus includes a diaphragm which may be immersed in the medium, the diaphragm comprising an outer diaphragm casing and at least one inner diaphragm casing, the outer casing being thicker and constituting mechanical protection for the inner casing, which is impervious to diffusion. The inner casing has a backing casing in the form of a diffusion resistent sheet and a layer arranged inside said casing and consisting of closed cells or ducts with shock-absorbing properties, which are filled with air, gas, liquid or foam or combinations thereof. The vibration-isolating properties of the diaphragm are increased considerably by this implementation, while the risk of puncturing the diaphragm is minimized at the same time. Further advantages of the invention will be apparent from the following.

The multi-layer diaphragm may be implemented as cushions which are placed in natural earth strata or fill materials or against structures in soil. The compressibility of these materials is thus increased for static or dynamic loading. For earthquakes the increased compressibility means that the risk of "liquifaction" decreases in loose, water-saturated friction soils.

The invention may be used to solve both active and passive vibration problems. In active vibration problems the multilayer membrane is arranged close to the vibration source, so as to change its dynamic properties. In passive vibration problems the main object is to screen off structures from a vibration source situated at a distance therefrom.

Static deformation problems may also be solved with the aid of the multi-layer diaphragm. As examples may be mentioned stress changes towards structures in soil (sheet piling, conduits, house walls etc.) due to frost, piledriving, infiltration of water into soil etc.

The distinguishing features of the invention will be seen from the following claims.

The invention will now be described in detail with reference to the acocmpanying drawings, on which

Figure 1 is a cross section of a multi-layer diaphragm,

Figure 2 is a cross section of a multi-layer diaphragm according to an alternative embodiment,

Figure 3 illustrates in enlarged scale one end of the multi-layer diaphragm with one casing formed as a support layer provided with a bellows,

Figure 4 illustrates an alternative embodiment of both support layers, and

Figure 5 illustrates an alternative embodiment of an inner diaphragm casing in an unfolded flat state.

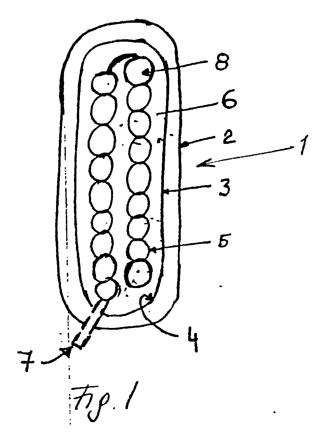

In a simple embodiment, see Figure 1, the invention is implemented as a multi-layer diaphragm 1, which comprises an outer diaphragm casing 2 and an inner diaphragm casing 3 in the form of a sheet. The outer casing 2 (the protective casing) is made as a closed container from a strong, air tight material, e.g. plastics. The thickness of the casing 2 is greater than the thickness of the casing 3. Inside the outer casing 2 the inner casing 3 (diffusion seal) is arranged to prevent air diffusing out to the casing 2. The casing 3 has a backing casing 4 consisting of diffusion-resistant sheet (plastics, metal, etc.) On the inside there is arranged a flexible sheet 5 comprising closed cells 8 according to Figure 1, or open ducts according to Figure 5. The cells 8 may either be cohesive or separated from each other. The space 6 or the cells 8 may be filled with air, gas, liquid or foam. In certain cases it may be suitable directly to join the sheets 2, 3 and/or 5 to each other, e.g. by welding or gluing. In Figure 1 the spaces between the different layers have been exaggerated somewhat so that the different layers and spaces will be perceived with desirable clarity. A valve 7, indicated by dashed lines in Figure 1, may be assigned to the inner diaphragm casing 3 and/or the cells 8 to fill the space 6 or 8 with a suitable medium and to the desired pressure. The pressure may be different in the space 6, cells 8 and/or the space between the sheets 2 and 3, and is adjusted to suit the problem in hand. The pressure in the cells 8 is customarily higher than the pressure in any of the other spaces. To increase the mobility and flexibility of the multi-layer diaphragm it is suitable that the inner casing 3 is freely arranged in, but in close association to, the outer casing 2. The multi-layer diaphragm in accordance with the invention can have a thickness of one or some centimeters. In spite of the relatively thin diaphragm, vibrations occurring are isolated effectively due to the air-filled, flexible cells. The risk of puncturing the multi-layer diaphragm is very small. Damage to one or a few cells does not reduce the vibration-damping properties of the diaphragm. The cells 8 remain even though the medium in the space 6 disappears or if it has been consciously excluded.

The risk of a gas in the space diffusing out through the multi-layer diaphragm is small due to the diffusion-sealing sheet 3 and the outer diaphragm casing 2. The protective casing 2 shall be sufficiently strong so that the pressure from the earth strata, which is usually un-uniform, is taken up and distributed by it together with the medium in the space 6. The diaphragm element according to Figure 1 can be coupled together in different ways to larger cohesive panels, of Figures 2 and 5.

A multi-layer diaphragm is illustrated in Figure 2, and has an outer diaphragm casing 2' and an inner diaphragm casing 3', similar to casings described in connection with Figure 1. A support layer 9 is attached to the outer diaphragm casing 2'. An advantage with the support layer is that it further evens out large concentrated loads on the multi-layer diaphragm. Another advantage is that the diaphragm can be easily attached to structures, e.g. building walls. If a multi-layer diaphragm is to be raised in the soil in conjunction with refilling after excavation, the diaphragm is provided with one or two support layers 9 for facilitating refilling. Without this support layer, great demands are made on the nature of the fill material, so that it will not damage the diaphragm. It is also suitable to provide multi-layer diaphragm in submarine installations with an outer support layer to even out pressure differences in the water. As will be further seen from Figure 2, the inner diaphragm casing 3' may be divided into sub-casings 10. Each sub-casing may have an interior pressure differing from the remaining sub-casings. This is suitable when the diaphragm is used in soil or water down to large depths where the pressure is large compared with the pressure at the surface. In this way the compression of the diaphragm may be kept constant over its entire length. The risk of puncturing the whole of the inner casing 3 is decreased at the same time.

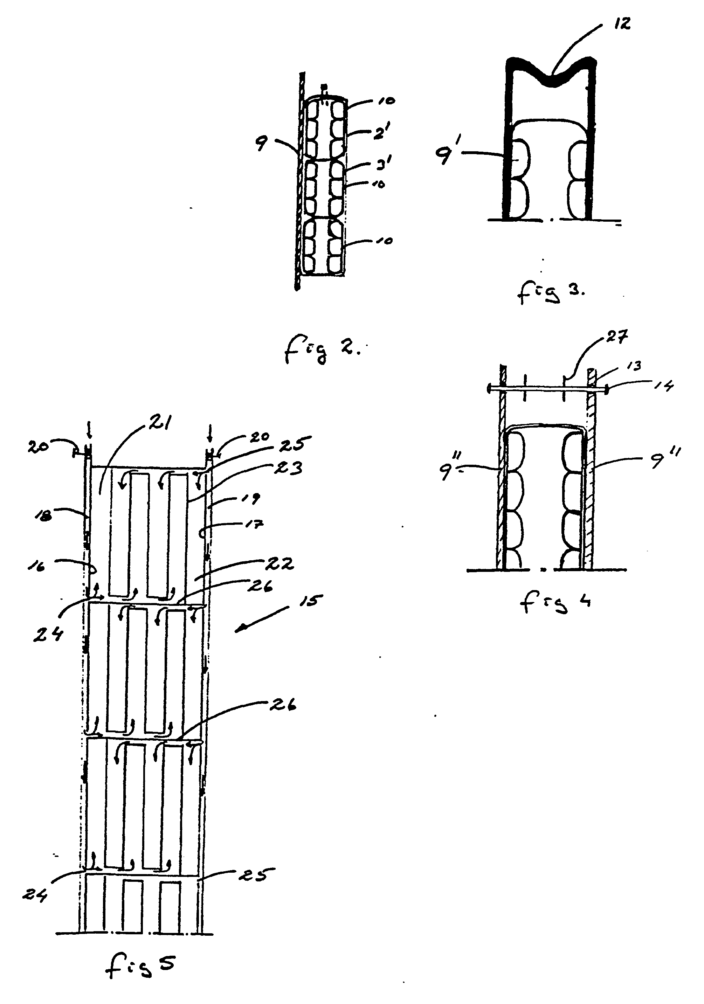

The stiffness of the multi-layer diaphragm increases in the cases where two support layers 9 are used, one on either side of the diaphragm. It is also possible to arrange a cohesive support layer 9' round the entire periphery of the multi-layer diaphragm. Its thickness can be increased in certain cases to increase the volume compressibility in the medium which is to be dampened. In this case the short sides of the diaphragm are suitably formed as bellows 12, which will be seen in Figure 3, to increase the flexibility of the diaphragm and its ability to take up forces. In this case the support layer may replace the outer casing 2 or 2'.

An alternative embodiment of the arrangement according to Figure 3 is illustrated in Figure 4. Here both support layers 9'' are coupled to each other with the aid of common guide or flexible coupling means 14 via holes 13 in the layers. The guide means may be provided with abutments 27 restricting the maximum amount of compression of the membrane and thereby protecting it from overloading.

In certain cases it may be desirable to vary the pressure in the multi-layer diaphragm after installing it. This can be achieved in different ways.

As previously mentioned, the inner casing 3, 3' may be formed with ducts instead of cells. Such a diaphragm casing 15 is illustrated in Figure 5 in a flat condition. Two sheets one on top of the other are preferably welded together along their outer edges. In the vicinity of the longitudinal outer edges of the casing inlet ducts 18, 19 are formed with the aid of multitudinal weld seams 16, 17, the ducts being provided with valve means 20 at one end of the casing. At the other end of the casing the ducts are closed off with the aid of transverse weld seams. Between the longitudinal inlet ducts the casing is provided with two mutually spaced main ducts 21, 22 which are formed by a zig-zag weld seam 23. The main duct 21 is in communication with the inlet duct 18 via the opening 24, and the main duct 22 is in communication with the inlet duct 19 via the opening 25. As will be seen from Figure 5, the diaphragm casing 15 may be divided into sub-casings by transverse weld seams 26. A plurality of openings 24, 25 are thus formed in the inlet ducts 18 and 19. The different duct systems can also be manufactured and located separate from each other, e.g. in the form of a hose system.

Both main ducts can be filled with air, gas, liquid or foam in a similar way as with the previously mentioned cells. An advantage with the ducts according to the invention is that the same media at different pressures or different media can be used simultaneously. After filling a sub-casing it is also possible to extend the transverse weld 26 by welding to delimit this sub-casing from another or other sub-casings, thus enabling different pressures to be generated in the different sub-casings.

The diaphragm casing in accordance with the invention can also be used in an arrangement where tubes are coaxially arranged around piles between which there is an air gap (slot). A flat diaphragm casing arranged in the slot can be filled with a suitable medium so that the casing expands and fills the gap. Coaxially arranged piles of this kind are described in detail in the Swedish patent application 8203047-9 (436774). In a similar way, flat multi-layer diaphragms can be arranged against support structures (sheet piling, slotted walls etc.) in earth, fill material, water or snow.

From what has been set forth above will be perceived that the multi-layer diaphragm in accordance with the invention may be used within widely different fields for vibration isolation or compression increase of earth or fill material. With the aid of a diaphragm comprising several layers the risk of diffusion through, and puncturing of the diaphragm walls, is reduced. The cells or ducts of the inner casing increase the vibration-isolating properties of the multi-layer diaphragm.

The diaphragm also has favourable heat-insulation properties and can reduce static loads against basement walls or other structures.

## Claims

1. Arrangement for vibration isolation or vibration damping of vibrations generated in a medium in the form of earth or water, said arrangement including a diaphragm (1) which may be immersed in the medium, the diaphragm (1) comprising an outer diaphragm casing (2, 2', 9, 9', 9'') and at least one inner diaphragm casing (3, 3', 15), characterized in that the outer casing is thicker and constitutes mechanical protection for the inner casing, which is impervious to diffusion and that the inner casing (3, 3', 15) has a backing casing (4) in the form of a diffusion resistant sheet, and a layer (5) arranged inside said casing and consisting of closed cells (8) or ducts (21, 22) with shock-absorbing properties, which are filled with air, gas, liquid or foam or combinations thereof.

2. Arrangement as claimed in claim 1, characterized in that the cells or ducts are so arranged that one or more spaces (6) are formed between them and the inner diaphragm casing, which is or are filled with either air, gas, liquid or foam.

3. Arrangement as claimed in either of claims 1 or 2, with the inner diaphragm casing (15) having ducts, characterized in that the casing comprises two sheets welded to each other along their outer edges and with orifices opening out into inlet ducts (18, 19) which are arranged parallel to the longitudinal sides of the casing and which communicate with main ducts (21, 22) arranged in the casing.

4. Arrangement as claimed in claim 3, characterized in that a first inlet duct (18) at one side of the casinng (15) communicates via one or more first duct openings (24) with one or more first main ducts (21) and that a second inlet duct (19) at the opposite side of the casing communicates with one or more second main ducts (22) via one or more second duct openings (25).

5. Arrangement as claimed in claim 4, characterized in that the first main duct or ducts (21) is/ are separated from the second main duct or ducts (22) with the aid of cohesive longitudinal and transverse seams (23).

6. Arrangement as claimed in claim 5, characterized in that the first and the second main ducts are formed as cohesive fork-shaped projections, and the longitudinal and transverse seams arranged such that the fork-shaped projections of the first main duct cover the space between the fork-shaped projections of the second main duct, whereby contiguous seams of adjacent fork-shaped projections are common.

7. Arrangement as claimed in one or more of the preceding claims, characterized in that the inner diaphragm casing is divided into sub-casings (10) which may be sealed off from each other.

8. Arrangement as claimed in one or more of claims 1—7, characterized in that at least one support layer (9, 9', 9'') is arranged outside the outer diaphragm casing (2, 2').

9. Arrangement as claimed in claim 8, characterized in that the outer diaphragm casing (2, 2') is provided with two support layers (9'') one at each of the long sides of the diaphragm casing.

10. Arrangement as claimed in claim 9, characterized in that the support layers (9'') are connected to each other by one or more flexible couplings (14).

11. Arrangement as claimed in claim 10, characterized in that the flexible coupling or couplings (14) are provided with abutments (27).

12. Arrangement as claimed in any of claims 1—7, characterized in that the outer diaphragm casing is constituted by a support layer (9') (Figure 3).

13. Arrangement as claimed in claim 12, characterized in that the support layer (9') includes one or more flexible couplings (12).

14. Arrangement as claimed in claims 10 or 13, characterized in that the flexible coupling is a bellows.

15. Arrangement as claimed in any one or some of the preceding claims, characterized in that said diaphragm casings (3, 3', 15) have one or more valve means (7, 20, 21) whereby the cells, ducts, spaces and sub-casings may be provided with pressures which are either the same or mutually differing.

**Patentansprüche**

1. Anordnung zum Isolieren oder Dämpfen von Schwingungen, die in einem Medium aus Erde oder Wasser entstehen, wobei die Anordnung eine Membran (1) enthält, die in das Medium eingetaucht werden kann, und die Membran (1) eine Membran-Außenhülle (2, 2', 9, 9', 9'') und mindestens eine Membran-Innenhülle (3, 3', 15) aufweist, dadurch gekennzeichnet, daß die Außenhülle dicker ist und einen mechanischen Schutz für die Innenhülle bildet, die diffusionsundurchlässig ist, und daß die Innenhülle (3, 3', 15) eine Futterhülle (4) in Form einer diffusionsbeständigen Schicht und eine Schicht (5) aufweist, die innerhalb dieser Hülle angeordnet ist und die aus geschlossenen Zellen (8) oder Kanälen (21, 22) mit stoßabsorbierenden Eigenschaften besteht, welche mit Luft, Gas, Flüssigkeit, Schaum oder einer Kombination hiervon gefüllt sind.

2. Anordnung nach Anspruch 1, dadurch gekennzeichnet, daß die Zellen oder Kanäle so angeordnet sind, daß zwischen ihnen und die Membran-Innenhülle ein oder mehr Zwischenräume (6) gebildet werden, der oder die mit Luft, Gas, Flüssigkeit oder Schaum gefüllt sind.

3. Anordnung nach Anspruch 1 oder 2, wobei die Membran-Innenhülle (15) Kanäle aufweist, dadurch gekennzeichnet, daß die Hülle zwei Schichten aufweist, die miteinander entlang ihren Außenkanten verschweißt sind und Öffnungen haben, die in Einlaß-Kanäle (18, 19) münden, welche parallel zu den Längsseiten der Hülle angeordnet sind und mit Hauptkanälen (21, 22) in Verbindung stehen, die in der Hülle angeordnet sind.

4. Anordnung nach Anspruch 3, dadurch gekennzeichnet, daß ein erster Einlaß-Kanal (18) auf der einen Seite der Hülle (15) über eine oder mehr Kanal-Öffnungen (24) mit einem oder mehr ersten Hauptkanälen (21) in Verbindung steht und daß ein zweiter Einlaß-Kanal (19) auf der entgegengesetzten Seite der Hülle mit einem oder mehr zweiten Hauptkanälen (22) über eine oder mehr zweite Kanal-Öffnungen (25) in Verbindung steht.

5. Anordnung nach Anspruch 4, dadurch gekennzeichnet, daß der erste Hauptkanal oder die ersten Hauptkanäle (21) von dem zweiten Hauptkanal oder den zweiten Hauptkanälen (22) mit Hilfe von zusammenhängenden Längs- und Querschweißnähten (23) getrennt ist/sind.

6. Anordnung nach Anspruch 5, dadurch gekennzeichnet, daß die ersten und die zweiten Hauptkanäle als zusammenhängende gabelförmige Vorsprünge ausgebildet und die Längs- und Querschweißnähte so angeordnet sind, daß die gabelförmigen Vorsprünge des ersten Hauptkanals den Zwischenraum zwischen den gabelförmigen Vorsprüngen des zweiten Hauptkanals abdecken, wobei benachbarte Schweißnähte von angrenzenden, gabelförmigen Vorsprüngen gemeinsam sind.

7. Anordnung nach einem oder mehreren der vorhergehenden Ansprüche, dadurch gekennzeichnet, daß die Membran-Innenhülle in Unter-Hüllen (10) aufgeteilt ist, die voneinander abgedichtet sein können.

8. Anordnung nach mindestens einem der Ansprüche 1 bis 7, dadurch gekennzeichnet, daß mindestens eine Stützschicht (9, 9', 9'') an der Außenseite der Membran-Außenhülle (2, 2') angeordnet ist.

9. Anordnung nach Anspruch 8, dadurch gekennzeichnet, daß die Membran-Außenhülle (2, 2') mit zwei Stützschichten (9'') ausgestattet ist, einer auf jeder Längsseite der Membranhülle.

10. Anordnung nach Anspruch 9, dadurch gekennzeichnet, daß die Stützschichten (9'') miteinander durch eine oder mehr flexible Kupplungen (14) verbunden sind.

11. Anordnung nach Anspruch 10, dadurch gekennzeichnet, daß die flexible Kupplung oder Kupplungen (14) mit Vorsprüngen (27) ausgestattet ist/sind.

12. Anordnung nach einem der Ansprüche 1 bis 7, dadurch gekennzeichnet, daß die Membran-Außenhülle durch eine Stützschicht (9') gebildet ist (Figur 3).

13. Anordnung nach Anspruch 12, dadurch gekennzeichnet, daß die Stützschicht (9') eine oder mehr flexible Kupplungen (12) einschließt.

14. Anordnung nach Anspruch 10 oder 13, dadurch gekennzeichnet, daß die flexible Kupplung ein Faltenbalg ist.

15. Anordnung nach einem oder mehreren der vorhergehenden Ansprüche, dadurch gekennzeichnet, daß die Membran-Hüllen (3, 3', 15) ein oder mehr Ventilmittel (7, 20, 21) aufweisen, wodurch die Zellen, Kanäle, Zwischenräume und Unter-Hüllen mit Drücken versehen werden können, die entweder gleich oder gegenseitig verschieden sind.

## Revendications

1. Dispositif d'isolation contre les vibrations ou d'amortissement de vibrations engendrées dans un milieu tel que le sol ou l'eau, comprenant un diaphragme (1) susceptible d'être immergé dans le milieu, le diaphragme comportant une enveloppe extérieure du diaphragme (2, 2', 9, 9', 9'') et au moins une enveloppe intérieure du diaphragme (3, 3', 15), caractérisé en ce que l'enveloppe extérieure est plus épaisse que l'enveloppe intérieure et constitue une protection mécanique pour cette dernière qui est imperméable à la diffusion et en ce que l'enveloppe intérieure (3, 3', 15) comporte une enveloppe de soutien (4) sous la forme d'une feuille à l'épreuve de la diffusion ainsi qu'une feuille (5) disposée à l'intérieur de ladite enveloppe et consistant en des cellules fermées (8) ou des conduits (21, 22) ayant la propriété d'absorber les chocs, et qui sont remplis d'air, de gaz, de liquide, de mousse ou d'une combinaison de ces matériaux.

2. Dispositif conforme à la revendication 1, caractérisé en ce que les cellules ou conduits sont disposés de manière à former entre eux et l'enveloppe intérieure du diaphragme un ou plusieurs espaces (6) qui est (sont) rempli(s) d'air, de gaz, de liquide ou de mousse.

3. Dispositif conforme à l'une quelconque des revendications 1 ou 2, l'enveloppe intérieure du diaphragme (15) comportant des conduits, caractérisé en ce que l'enveloppe comprend deux feuilles soudées l'une à l'autre le long de leurs bords extérieurs et munies d'orifices s'ouvrant sur des conduits d'arrivée (18, 19) disposés parallèlement aux côtés longitudinaux de l'enveloppe et qui communiquent avec des conduits principaux (21, 22) disposés à l'intérieur de l'enveloppe.

4. Dispositif conforme à la revendication 3, caractérisé en ce qu'un premier conduit d'arrivée (18), situé d'un côté de l'enveloppe (15), communique par l'intermédiaire d'une ou plusieurs premières ouvertures de conduit (24), avec un ou plusieurs premiers conduits principaux (21), et en ce qu'un second conduit d'arrivée (19), situé du côté opposé de l'enveloppe, communique avec un ou plusieurs seconds conduits principaux (22) par l'intermédiaire d'une ou plusieurs secondes ouvertures de conduit (25).

5. Dispositif conforme à la revendication 4, caractérisé en ce que le ou les premiers conduits principaux (21) est ou sont séparés du ou des seconds conduits principaux (22) à l'aide de cordons de soudure (23) adjacents longitudinaux et transversaux.

6. Dispositif conforme à la revendication 5, caractérisé en ce que les premier(s) et second(s) conduits principaux sont constitués en saillies adjacentes en forme de fourche, et en ce que les cordons de soudure longitudinaux et transversaux sont disposés de telle manière que les saillies en forme de fourche du premier conduit principal remplissent l'espace ménagé entre les saillies en forme de fourche du second conduit principal, de sorte que les cordons de soudure contigus des saillies en forme de fourche adjacentes sont communs.

7. Dispositif conforme à l'une ou plusieurs des revendications précédentes, caractérisé en ce que l'enveloppe intérieure du diaphragme est subdivisée en enveloppes élémentaires (10) susceptibles d'être séparées l'une de l'autre de manière étanche.

8. Dispositif conforme à l'une ou plusieurs des revendications 1 à 7, caractérisé en ce qu'au moins une couche support (9, 9', 9'') est ménagée à l'extérieur de l'enveloppe extérieure du diaphragme (2, 2').

9. Dispositif conforme à la revendication 9, caractérisé en ce que l'enveloppe extérieure du diaphragme (2, 2') est pourvue de deux couches support (9'') disposées chacune sur l'un des longs côtés de l'enveloppe du diaphragme.

10. Dispositif conforme à la revendication 9, caractérisé en ce que les couches support (9'') sont reliées l'une à l'autre par un ou plusieurs éléments de liaison flexibles (14).

11. Dispositif conforme à la revendication 10, caractérisé en ce que le ou les éléments de liaison flexibles (14) est ou sont munis de butées (27).

12. Dispositif conforme à l'une des revendications 1 à 7, caractérisé en ce que l'enveloppe extérieure du diaphragme est constituée par une couche support (9') (figure 3).

13. Dispositif conforme à la revendication 11, caractérisé en ce que la couche support (9') comprend un ou plusieurs éléments de liaison flexibles (12).

14. Dispositif conforme aux revendications 10 et 13, caractérisé en ce que l'élément de liaison flexible est un soufflet.

15. Dispositif conforme à l'une quelconque ou plusieurs des revendications 1 à 14, caractérisé en ce que lesdites enveloppes du diaphragme (3, 3', 15) comportent un ou plusieurs moyens de robinetterie (7, 20, 21) par lesquels les cellules, conduits, espaces et enveloppes élémentaires sont susceptibles d'être remplis à des pressions qui sont ou bien identiques ou bien différentes l'une de l'autre.

Fig. 1

fig 2.

fig 3.

fig 4

fig 5